# EUROPÄISCHE PATENTSCHRIFT

(11) **EP 3 525 017 B1**
(45) Veröffentlichungstag und Bekanntmachung des Hinweises auf die Patenterteilung: **31.08.2022**
(21) Anmeldenummer: 19000074.5
(22) Anmeldetag: 08.02.2019
(51) Int. Cl.: G02B 6/00

(54) **BELEUCHTUNGSVORRICHTUNG MIT LICHTLEITER UND LICHTMISCHER FÜR EINE MEHRFARBIGE LICHTQUELLE**
LIGHTING DEVICE WITH LIGHT GUIDE AND LIGHT MIXER FOR A MULTI-COLOR LIGHT SOURCE
DISPOSITIF D'ÉCLAIRAGE POURVU DE GUIDE D'ONDES ET MÉLANGEUR DE LUMIÈRE POUR UNE SOURCE LUMINEUSE MULTICOLORE

(30) Priorität: 08.02.2018 DE 102018001029
(43) Veröffentlichungstag der Anmeldung: 14.08.2019
(73) Patentinhaber: MENTOR GmbH & Co. Präzisions-Bauteile KG, 40699 Erkrath (DE)
(72) Erfinder: Wilms, Hans-Walter, 42855 Remscheid (DE); Kümpfel, Thomas, 40764 Langenfeld (DE); Mohr, Benjamin, 40724 Hilden (DE); Kretschmer, Stefan, 40699 Erkrath (DE)
(74) Vertreter: Henseler, Daniela

(56) Entgegenhaltungen:
- EP-A1- 2 284 583
- EP-A1- 3 270 050
- DE-A1- 10 139 578
- DE-A1- 10 236 499
- DE-A1-102006 004 996

## Beschreibung

Die Erfindung betrifft eine Beleuchtungsvorrichtung mit einer mehrfarbigen Lichtquelle nach dem Oberbegriff des Anspruchs 1.

Aus EP 3 270 050 A1 ist eine gattungsgemäße Beleuchtungsvorrichtung bekannt.

Aus DE 10 2010 046 342 B4 ist eine Beleuchtungsvorrichtung mit einer Kopplungsvorrichtung zur Einkopplung von Licht eines Leuchtmittels in einen Lichtleiter eines Fahrzeugs bekannt. Der Lichtleiter kann sich dabei aus einem Glasfaserbündel zusammensetzen. Für die Beleuchtung des Innenraums eines Kraftwagens werden zunehmend Lichtleiter eingesetzt, welche das Licht einer Lichtquelle sehr variabel an verschiedene Orte im Innenraum des Kraftwagens weiterleiten können. In der Regel werden die Lichtleiter durch Glasfasern gebildet, während als Lichtquelle zunehmend moderne Leuchtmittel, wie z.B. LEDs, Verwendung finden. Für eine hohe Lichtausbeute ist es erforderlich, das Licht der Lichtquelle möglichst effizient in den Lichtleiter einzukoppeln. Üblicherweise befindet sich die Lichtquelle direkt an der Stirnfläche des Lichtleiters, so dass das Licht senkrecht auf die Lichtleiterfläche auftritt. Das Licht der Lichtquelle trifft dann nur in der Mitte des Lichtleiters ideal auf. Je entfernter das Licht von der Mitte auftritt, desto ungünstiger werden die Einkopplungswerte. Werden als Lichtquelle mehrfarbige LEDs verwendet, so kann sich eine schlechte Farbmischung ergeben. Die Kopplungsvorrichtung umfasst daher einen Hohlkörper mit einer zumindest teilweise reflektierenden Innenwand, wobei die Innenwand unterschiedliche Reflexionskoeffizienten für verschiedene Lichtfarben aufweisen kann. Nachteilig ist jedoch, dass trotz allem das ausgestrahlte Licht keine hinreichende Homogenität hinsichtlich Farbe und Intensität aufweist.

Der Erfindung liegt daher die Aufgabe zugrunde, eine Beleuchtungsvorrichtung zu schaffen, die einfach aufgebaut ist und bei der die Homogenität des Lichts hinsichtlich Farbe und/oder Intensität verbessert ist.

Diese Aufgabe wird durch die Merkmale des Anspruchs 1 gelöst.

Hierdurch wird eine Beleuchtungsvorrichtung geschaffen, die mit wenig Aufwand den Lichtmischer derart verbessert, dass eine Fokussierung des Strahlenverlaufs bei signifikant reduziertem Verlust erreicht wird. Zum einen wird nämlich eine bessere Durchmischung des Lichts, z.B. des Rot-, Grün- und Blau-Anteils einer RGB-LED, und zum anderen eine Reduzierung der Verluste bei der Einkopplung in einen Zielquerschnitt erreicht, welcher vorzugsweise kleiner als der Querschnitt der Emitterfläche ist.

Weitere Vorteile und Ausgestaltungen der Erfindung sind der nachfolgenden Beschreibung und den Unteransprüchen zu entnehmen.

Die Erfindung wird nachstehend anhand der in den beigefügten Abbildungen dargestellten Ausführungsbeispiele näher erläutert.
Fig. 1 zeigt schematisch einen Schnitt einer Beleuchtungsvorrichtung gemäß einem ersten Ausführungsbeispiel,
Fig. 2 zeigt schematisch einen Strahlenverlauf in einem Lichtmischer einer Beleuchtungsvorrichtung nach Fig. 1,
Fig. 3 zeigt schematisch eine perspektivische Ansicht eines Lichtmischers einer Beleuchtungsvorrichtung nach Fig. 1,
Fig. 4 zeigt schematisch einen Längsschnitt eines Lichtleiters eines Lichtmischers einer Beleuchtungsvorrichtung nach Fig. 1,
Fig. 5 zeigt schematisch eine Ansicht einer Beleuchtungsvorrichtung gemäß einem weiteren Ausführungsbeispiel.

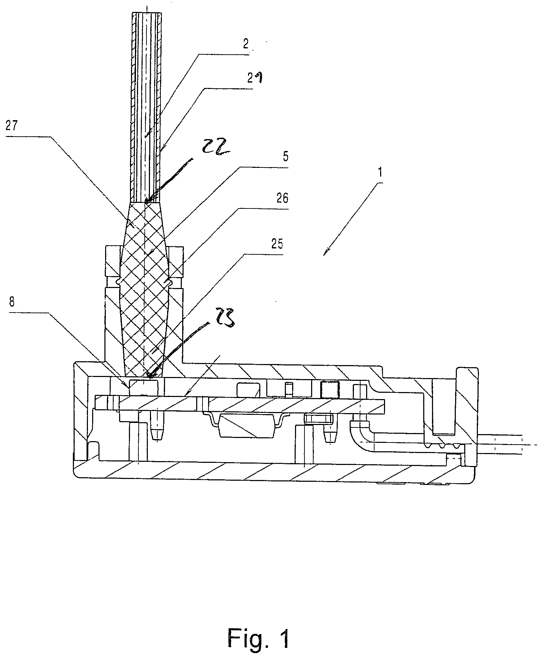

Wie Fig. 1 zeigt, betrifft die Erfindung eine Beleuchtungsvorrichtung 1 mit einer mehrfarbigen Lichtquelle 8, die Licht über einen länglich ausgebildeten Lichtmischer 5 in einen Lichtleiter 2 einkoppelt. Der Lichtleiter 2 ist dazu an seinem einen Ende 22 gegenüber dem Lichtmischer 5 fixiert. Die Lichtquelle 8 ist zur Stirnfläche 23 des Lichtmischers 5 positioniert. Der Lichtleiter 2 ist an seinem einen Ende 22 über einen spritzgießtechnischen Anguss mit dem Lichtmischer 5 dauerhaft verbunden. Ferner ist der Lichtmischer 5 auf seiner Länge derart ausgelegt, dass mindestens 60 % des eintretenden Lichts mindestens zwei innere Reflexionen vor der Einkopplung in den Lichtleiter 2 erfährt.

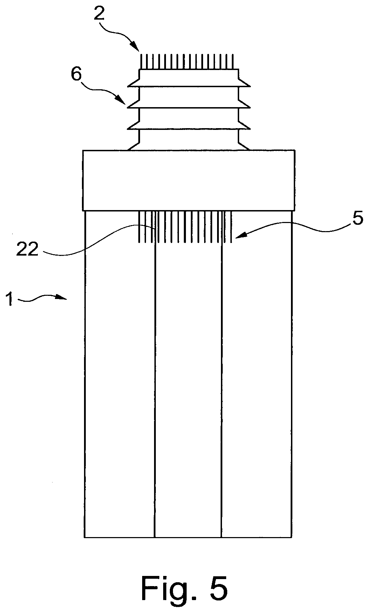

Wie Fig. 5 zeigt, ist kann der spritztechnische Anguss von Lichtleiter 2 und Lichtmischer 5 über eine mechanische Zugentlastungsschelle 6 fixiert. Die Zugentlastungsschelle 6 kann als Ferrule, insbesondere Crimpferrule, ausgebildet sein. Die Zugentlastungsschelle 6 bildet ein Halterungselement, das eine fixierende Kraft auf den Lichtleiter 2 ausübt insbesondere dann, wenn der Lichtleiter 2 als ein Lichtleiterbündel, insbesondere Faserbündel, ausgebildet ist und damit biegeschlaffe Ausläufer bildet. Das Lichtleiterbündel kann von einem Schlauch 21 umgeben sein. Das Lichtleiterbündel kann alternativ von Fadenenden eines textilen Flächengebildes gebildet sein. Demgegenüber ist der Lichtmischer 5 vorzugsweise biegesteif ausgebildet.

Erfindungsgemäß ist vorgesehen, dass der Lichtmischer 5 transparent ist und auf seiner Gesamtlänge mindestens drei verschiedene Regionen 25, 26, 27 mit unterschiedlichen optischen Reflexions- oder Übertragungseigenschaften aufweist. Beispielsweise ändert sich zwischen den Regionen 25, 26, 27 nur die Neigung der Randflächen. Damit sind dann tatsächlich andere Reflexionswinkel verbunden. Dabei können sowohl das Material als auch die Oberfläche gleich bleiben und insoweit die Übertragungseigenschaften nicht ändern.

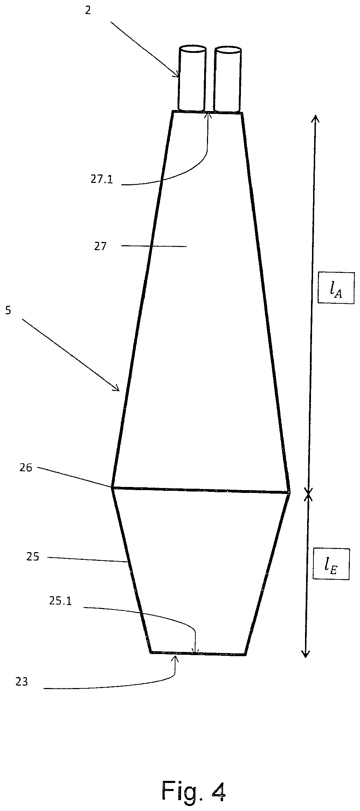

Wie insbesondere Fig. 4 zeigt, ist der Lichtmischer 5 ferner vorzugsweise mit einem in Richtung der Lichtquelle 8 liegenden ersten Ende 25.1 einer ersten Region 25, einem in Richtung des Faserbündels 2 liegenden zweiten Ende 27.1 einer zweiten Region 27 und einem dazwischenliegenden Übergangsbereich einer dritten Region 26 ausgebildet.

Wie weiterhin in den Fig. 1 bis Fig. 4 dargestellt ist, ist der Lichtmischer 5 vorzugsweise keulenförmig ausgebildet. Das erste Ende 25.1 weist dann vorzugsweise eine erste Nennweite qE auf, die größer ist als eine zweite Nennweite qA des zweiten Endes 27.1, und die erste qE und die zweite qA Nennweite sind dann vorzugsweise kleiner als eine dritte Nennweite qV des Übergangsbereichs der dritten Region 26 mit einer maximalen Verdickung einer Außenkontur des Lichtmischer 5.

Der Lichtmischer 5 ist zur Reflexion der durch ihn hindurchtretenden Lichtstrahlen durch innere Totalreflexion ausgeführt. Dazu besitzt der Lichtmischer 5 bedingt durch das verwendete Material einen entsprechend hohen Brechungsindex des Materials, der vorzugsweise im Bereich von 1,4 bis 1,8 liegt. Geeignete Materialien sind Glas oder Plastwerkstoffe, deren Konsistenz wählbar ist. Es können auch optisch wirksame Beschichtungen auf den Lichtmischer 5 aufgebracht sein. Entscheidend ist vorzugsweise, dass die im Lichtmischer 5 stattfindende, durch seine Form und sein Material bedingte Totalreflexion den Anforderungen der Zielsetzung hinsichtlich Durchmischung des Lichts und der Maximierung der Effizienz gerecht wird.

Wesentlich für die optischen Reflexions- oder Übertragungseigenschaften des Lichtleiters sind darüber hinaus die für den Lichtmischer 5 gewählten verschiedenen Regionen 25, 26, 27, die sich beispielsweise in ihrer Raumform unterscheiden, um auf die Richtung der im Lichtmischer 5 reflektierten Lichtstrahlen einzuwirken.

Wie beispielsweise Fig.4 zeigt, bildet die erste Region 25 bedingt durch einen axial sich erweiternden Querschnitt eine Reflexionszone, damit beispielsweise die Anzahl an Reflexionen erhöht wird, was sich vorteilhaft auf eine Mischung unterschiedlicher Lichtfarben auswirkt. Die erste Region 25 kann also schüsselartig zur Optimierung des Strahleneingangs genutzt werden. Im Übergangsbereich der dritten Region 26 wird eine maximale Nennweite qV erreicht, deren axiale Erstreckung wiederum wählbar ist, um dem Lichtmischer 5 beispielsweise einen mittigen stabförmigen Abschnitt zu verleihen. Hin zum zweiten Ende 27.1 verjüngt sich der Querschnitt des Lichtmischers 5 in der zweiten Region 27. Ein sogenannter Trichtereffekt wird begründet, der dazu dient, das Licht zu richten in Bezug auf das zweite Ende 27.1 zur Einkopplung in das Faserende 22.

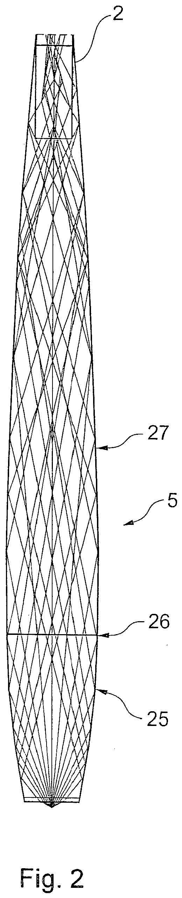

Fig. 2 zeigt den Lichtstrahlenverlauf für den vorstehend beschriebenen Lichtmischer 5 und verdeutlicht die Einkopplung von Licht in den Lichtleiter 2 mit erhöhter Intensität. Wie im Strahlenverlauf gemäß Fig. 2 gezeigt, führt die Verbreiterung in der ersten Region 25 bis hin zur dritten Region 26 mit einer dritten Nennweite zu einer Fokussierung auf das Ende 27.1 der zweiten Region 27 und damit auf ein Ende der von dem Lichtmischer 5 gebildeten Mischlinse. Eine größere Nennweite des ersten Endes 25.1 gegenüberliegend der Lichtquelle 8 kann so genutzt werden zur optimalen Einkopplung des Lichts, da die Querschnittsveränderung hin zu einer kleineren Nennweite der zweiten Region 27 dann zu keinem signifikanten Intensitätsverlust mehr führt. Vorteilhaft ist insoweit, dass die dritte Nennweite qV des Übergangsbereichs in der dritten Region 26 maximal das 1,5-fache der ersten Nennweite qE der ersten Region 25 und damit der Nennweite der Einkopplung an der Lichtquelle 8 beträgt.

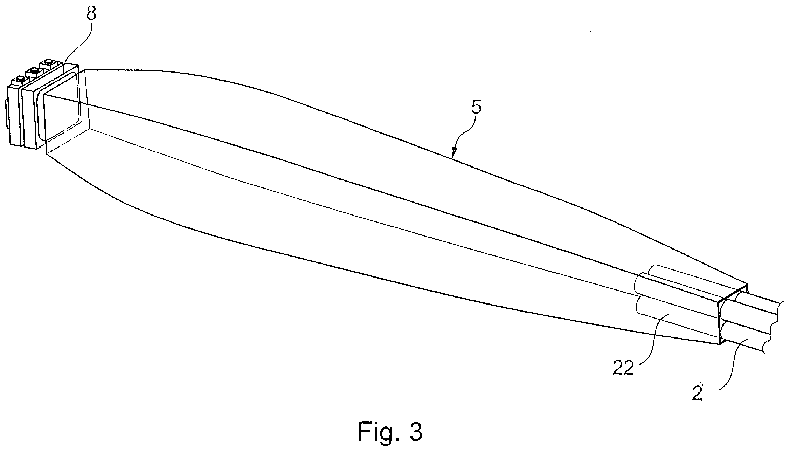

Wie Fig. 3 zeigt, kann der Lichtmischer 5 alternativ auch eine quaderförmige Raumform besitzen, wobei jedoch die zuvor beschriebenen Gestaltungsvarianten zur ersten, zweiten und dritten Nennweite der Regionen 25, 26, 27 unverändert gelten. Der Lichtmischer 5 sollte in seiner Funktion als Mischlinse nämlich mindestens zwei Anforderungen erfüllen: Zum einen die Gewährleistung einer hinreichenden Farbmischung auf möglichst kurzer Strecke und zum anderen eine Steigerung der Effizienz bei einer Reduzierung des Querschnitts vom ersten Ende 25.1 (Einkopplungsquerschnitt) zum zweiten Ende 27.1 (Austrittsquerschnitt).

Vorzugsweise sind die drei vorstehend beschriebenen Nennweiten von derselben Form, was aber nicht zwingend erforderlich ist. Mögliche Querschnittsformen sind unter anderem quadratisch, rund, elliptisch, trigonal, tetragonal, pentagonal, hexagonal, heptagonal, usw.

Eine Gesamtlänge des Lichtmischers 5 ist vorzugsweise ausgebildet mit einer Länge LE der ersten Region 25 und einer Länge LA der zweiten Region 27. Das Längenverhältnis dieser Regionen 25, 27 kann derart aufgeteilt sein, dass beispielsweise die zweite Region 27 das 3- bis 6-fache an Länge der ersten Region 25 besitzt. Die dritte Region 26 kann als Übergangsbereich der maximalen Verdickung auf eine Übergangsebene beschränkt sein, wie in Fig. 4 dargestellt ist. Alternativ kann die Region 26 eine Länge zwischen der ersten Region 25 und der zweiten Region 27 definieren. Hinsichtlich der Nennweiten qE, qA und qV ist beispielsweise vorgesehen, dass die dritte Nennweite qV im Übergangsbereich der dritten Region 26 vorzugsweise weniger als das 3-fache der zweiten Nennweite qA des zweiten Endes 27.1 im Bereich der Auskopplungsfläche des Lichtmischers 5 beträgt. Bei den in Fig. 2 und Fig. 3 gezeigten Ausführungsbeispielen des Lichtmischers 5 ist vorgesehen, dass die dritte Nennweite qV weniger als das 2-fache der zweiten Nennweite qA des zweiten Endes 27.1 im Bereich der Auskopplungsfläche beträgt. Hierdurch wird eine Optimierung bezüglich einer Reduzierung der Querschnittsveränderungen erreicht.

Ein Faserbündel des Lichtleiters 2 kann an diesem Ende auch in den Lichtmischer 5 im Bereich des spritzgießtechnischen Angusses eingebunden sein. Die Fasern des Lichtleiters 2 können dann als eine Einheit zum Lichtmischer 5 verschmolzen sein.

Die Besonderheit ist hier, dass dieser Vorgang in einem Spritzgussprozess erfolgen kann. Dabei verschmelzen vorzugsweise die Fasern des Lichtleiters 2 mit dem Lichtmischerwerkstoff, beispielsweise PMMA, PC. Ein Vorteil liegt auch in der Verringerung der notwendigen Bauteile. Eine einstückige Herstellung ist das Ergebnis, wobei der Lichtmischer 5 wie zuvor beschrieben optisch ausgebildet ist mit vorzugsweise mindestens drei verschiedenen Regionen 25, 26, 27.

Wie bereits ausgeführt, können als Lichtquelle 8 mehrfarbige LEDs, insbesondere RGB LEDs, verwendet werden. Ein- und auskoppelbar ist somit Licht mehrerer Wellenlängen, insbesondere Licht dreier unterschiedlicher Wellenlängen und/oder Licht der Farben rot, grün und blau.

Die LEDs und der Lichtmischer 5 sind dann vorzugsweise senkrecht zueinander positioniert. Der Lichtmischer 5 ist vorzugsweise gebildet aus einem Kunststoff wie beispielsweise PMMA oder Polycarbonat.

Erfindungsgemäß ist folglich ein Lichtleiter vorgesehen, der vorzugsweise einen biegesteifen Teil aufweist, welcher der Lichtmischung dient und einen vorzugsweise erheblich größeren biegeschlaffen Anteil aufweist, welcher zur Lichtverteilung und Lichtemission dient. Der vorzugsweise biegeschlaffe Anteil kann so ausgeführt sein, dass er Licht in mindestens zwei abgegrenzte Bereiche führt.

Das Licht kann hierbei so geführt sein, dass vom Eintritt in das Gesamtsystem (biegesteif und biegeschlaff) im biegesteifen Teil bis zum Austritt im biegeschlaffen Teil keine weitere Grenzfläche passiert wird. Der lichtführende Teil des Systems kann also über eine gemeinsame äußere optische Grenzfläche verfügen. Wie bereits vorstehend ausgeführt, kann der biegesteife Teil so ausgebildet sein, dass 60 % der geführten Strahlen mindestens zwei interne Reflexionen durchlaufen, bevor sie in den biegeschlaffen Teil übergehen.

Dabei kann der biegeschlaffe Anteil mit einem Polymer optisch niedriger Dichte ummantelt sein. Ausläufer des den biegeschlaffen Teil ummantelnden Materials können in den biegesteifen Teil des Lichtleiters hineinragen für eine bessere mechanische Haftung. Der biegeschlaffe Anteil kann ferner vieleckig ausgeführt sein und über eine oder mehrere Verjüngungen und Ausweitungen verfügen. An dem biegesteifen Teil können ferner Verrastungselemente vorgesehen sein.

Der biegeschlaffe Teil des Lichtleiters kann in Form einer textilen Fläche ausgeführt sein. Besonders bevorzugt, aber nicht abschließend, werden genannt Gewebe, Gestrick, Gewirk oder Gelege. Schließlich kann der biegeschlaffen Teil durch eine weitere transluzente Schicht entweder direkt oder indirekt ummantelt sein.

## Patentansprüche

1. Beleuchtungsvorrichtung mit einer mehrfarbigen Lichtquelle (8), die Licht über einen länglich ausgebildeten Lichtmischer (5) in einen Lichtleiter (2) einkoppelt, wozu der Lichtleiter (2) an seinem einen Ende (22) gegenüber dem Lichtmischer (5) fixiert ist, und die Lichtquelle (8) zur Stirnfläche (23) des Lichtmischers (5) positioniert ist, wobei der Lichtleiter (2) als Lichtleiterbündel ausgebildet ist und der Lichtmischer (5) auf seiner Länge derart ausgelegt ist, dass mindestens 60 % des eintretenden Lichts mindestens zwei innere Reflexionen vor der Einkopplung in den Lichtleiter (2) erfährt, **dadurch gekennzeichnet, dass** das Lichtleiterbündel von Fadenenden eines textilen Flächengebildes ausgebildet ist und der Lichtleiter an seinem einen Ende (22) über einen spritzgießtechnischen Anguss mit dem Lichtmischer (5) dauerhaft verbunden ist, wobei der spritzgießtechnische Anguss von Lichtleiter (2) und Lichtmischer (5) über eine mechanische Zugentlastungsschelle fixiert ist.

2. Beleuchtungsvorrichtung nach Anspruch 1, **dadurch gekennzeichnet, dass** die Zugentlastungsschelle als Ferrule ausgebildet ist.

3. Beleuchtungsvorrichtung nach einem der Ansprüche 1 bis 2, **dadurch gekennzeichnet**, das der Lichtmischer (5) auf seiner Gesamtlänge mindestens drei verschiedene Regionen (25, 26, 27) mit unterschiedlichen optischen Reflexions- oder Übertragungseigenschaften aufweist.

4. Beleuchtungsvorrichtung (1) nach einem der Ansprüche 1 bis 3, **dadurch gekennzeichnet, dass** der Lichtleiter (2) keulenförmig ausgebildet ist, wobei ein erstes Ende (25.1) eine erste Nennweite (qE) aufweist, die größer ist als eine zweite Nennweite (qA) eines zweiten Endes (27.1), und die erste (qE) und die zweite (qA) Nennweite kleiner sind als eine dritte Nennweite (qV) eines Übergangsbereichs einer dritten Region (26) mit einer maximalen Verdickung einer Außenkontur des Lichtleiters (2).

5. Beleuchtungsvorrichtung nach Anspruch 4, **dadurch gekennzeichnet, dass** eine Gesamtlänge des Lichtleiters (2) des Lichtmischers (5) das 3- bis 6-fache der dritten Nennweite (qV) des Übergangsbereichs einer dritten Region (26) mit maximaler Verdickung beträgt.

6. Beleuchtungsvorrichtung (1) nach einem der Ansprüche 1 bis 3, **dadurch gekennzeichnet, dass** der Lichtleiter (2) des Lichtmischers (5) faserseitig eine Stirnfläche aufweist, die direkt stoßseitig an einem Ende (22) des Faserbündels anschließt.

7. Beleuchtungsvorrichtung nach einem der Ansprüche 1 bis 6, **dadurch gekennzeichnet, dass** als Lichtquelle (8) mehrfarbige LEDs verwendet werden.

8. Beleuchtungsvorrichtung (1) nach Anspruch 1, **dadurch gekennzeichnet, dass** der Lichtleiter (2) und der Lichtmischer (5) aus demselben Kunststoff wie beispielsweise PMMA oder Polycarbonat gebildet sind

## Claims

1. Lighting device with a multicoloured light source (8), which couples light into a light guide (2) via an elongate light mixer (5), for which purpose the light guide (2) is fixed at its one end (22) opposite the light mixer (5) and the light source (8) is directed towards the end face (23) of the light mixer (5), wherein the light guide (2) is designed as a light-guide bundle and the light mixer (5) is designed along its length such that at least 60% of the incoming light undergoes at least two internal reflections before it is coupled into the light guide (2),**characterized in that** the light-guide bundle is formed by thread ends of a sheet-like textile structure and the light guide is permanently connected at its one end (22) to the light mixer (5) via an injection-moulded sprue, wherein the injection-moulded sprue of light guide (2) and light mixer (5) being fixed via a mechanical strain relief clamp.

2. Lighting device according to Claim 1, **characterized in that** the strain relief clamp is designed as a ferrule.

3. Lighting device according to any one of Claims 1 to 2, **characterized in that** the light mixer (5) has at least three different regions (25, 26, 27) with different optical reflection or transmission properties along its total length.

4. Lighting device (1) according to any one of Claims 1 to 3, **characterized in that** the light guide (2) is formed in the shape of a lobe, wherein a first end (25.1) has a first nominal width (qE) which is larger than a second nominal width (qA) of a second end (27.1), and the first (qE) and second (qA) nominal widths are smaller than a third nominal width (qV)of a transition area of a third region (26) with a maximum thickening of an outer contour of the light guide (2).

5. Lighting device according to Claim 4, **characterized in that** a total length of the light guide (2) of the light mixer (5) is 3 to 6 times the third nominal width (qV) of the transition area of a third region (26) with a maximum thickening.

6. Lighting device (1) according to any one of Claims 1 to 3, **characterized in that** the light guide (2) of the light mixer (5) has on its fibre side an end face that directly butts up against one end (22) of the fibre bundle.

7. Lighting device according to any one of Claims 1 to 6, **characterized in that** multi-colour LEDs are used as the light source (8).

8. Lighting device (1) according to Claim 1, **characterized in that** the light guide (2) and the light mixer (5) are formed of the same plastic such as, for example, PMMA or polycarbonate.

## Revendications

1. Dispositif d'éclairage avec une source de lumière (8) multicolore, qui injecte de la lumière dans un guide de lumière (2) par l'intermédiaire d'un mélangeur de lumière (5) réalisé de manière allongée, le guide de lumière (2) étant fixé à cet effet sur une extrémité (22) face au mélangeur de lumière (5) et la source de lumière (8) étant positionnée vers la face frontale (23) du mélangeur de lumière (5), dans lequel le guide de lumière (2) est réalisé en tant que faisceau de guides de lumière,
et le mélangeur de lumière (5) est conçu sur sa longueur de telle manière qu'au moins 60 % de la lumière entrante subit au moins deux réflexions intérieures avant l'injection dans le guide de lumière (2), **caractérisé en ce que** le faisceau de guides de lumière est réalisé par des extrémités de fil d'une structure textile et le guide de lumière est relié durablement sur une extrémité (22) au mélangeur de lumière (5) par l'intermédiaire d'un culot d'injection relevant de la technique de moulage par injection, dans lequel le culot d'injection relevant de la technique de moulage par injection du guide de lumière (2) et du mélangeur de lumière (5) est fixé par l'intermédiaire d'un collier de décharge de traction mécanique.

2. Dispositif d'éclairage selon la revendication 1, **caractérisé en ce que** le collier de décharge de traction est réalisé en tant que ferrule.

3. Dispositif d'éclairage selon l'une quelconque des revendications 1 à 2, **caractérisé en ce que** le mélangeur de lumière (5) présente sur sa longueur totale au moins trois régions (25, 26, 27) différentes avec différentes propriétés de réflexion ou de transmission optiques.

4. Dispositif d'éclairage (1) selon l'une quelconque des revendications 1 à 3, **caractérisé en ce que** le guide de lumière (2) est réalisé en forme de massue, dans lequel une première extrémité (25.1) présente une première largeur nominale (qE) qui est plus grande qu'une deuxième largeur nominale (qA) d'une deuxième extrémité (27.1), et les première (qE) et deuxième (qA) largeurs nominales sont plus petites qu'une troisième largeur nominale (qV) d'une zone de transition d'une troisième région (26) avec un épaississement maximal d'un contour extérieur du guide de lumière (2).

5. Dispositif d'éclairage selon la revendication 4, **caractérisé en ce qu'**une longueur totale du guide de lumière (2) du mélangeur de lumière (5) est 3 à 6 fois la troisième largeur nominale (qV) de la zone de transition d'une troisième région (26) avec un épaississement maximal.

6. Dispositif d'éclairage (11) selon l'une quelconque des revendications 1 à 3, **caractérisé en ce que** le guide de lumière (2) du mélangeur de lumière (5) présente côté fibre une face frontale, qui se raccorde directement côté impact à une extrémité (22) du faisceau de fibres.

7. Dispositif d'éclairage selon l'une quelconque des revendications 1 à 6, **caractérisé en ce que** des DEL multicolores sont utilisées en tant que source de lumière (8).

8. Dispositif d'éclairage (1) selon la revendication 1, **caractérisé en ce que** le guide de lumière (2) et le mélangeur de lumière (5) sont formés à partir de la même matière plastique, par exemple du PMMA (polyméthylméthacrylate) ou du polycarbonate.
